# EUROPEAN PATENT APPLICATION

(11) **EP 1 980 962 A2**
(43) Date of publication of application: **15.10.2008**
(21) Application number: 08250791.4
(22) Date of filing: 07.03.2008
(51) Int. Cl.: G06F 17/30

(54) **Data management apparatus, control program, and control method**

(30) Priority: 13.04.2007 JP 2007106278
(71) Applicant: KONICA MINOLTA BUSINESS TECHNOLOGIES, INC., Tokyo 100-0005 (JP)
(72) Inventor: Narimatsu, Eiichi Konica Minolta Business Technologies, Inc., Tokyo 100-0005 (JP)
(74) Representative: Roberts, Mark Peter

(57) **Abstract**

A data management apparatus for managing file data including image data or print data by a hierarchical structure, includes an operating unit designating a save source directory and a save destination directory; and a control unit copying or moving the designated save source directory as well as the file data included in the save source directory to the save destination directory, wherein if the save destination directory is on a higher hierarchy level than an upper directory directly including the save source directory, then the control unit copies or moves the save source directory with maintaining the higher directory.

## Description

### BACKGROUND OF THE INVENTION

### Field of the Invention

The present invention relates to a data management apparatus, a control program, and a control method. More specifically, the present invention relates to an image formation apparatus managing file data using a hierarchical structure, a control apparatus controlling the image formation apparatus, a control program for copying or moving file data, and a control method.

### Description of Related Art

Multifunction machines and copying machines (hereinafter, generically "image formation apparatuses") each including a copying function, a facsimile function, a printer function, and a scanner function have been widespread. An image formation apparatus of this type performs a processing for outputting image data read by a scanner or that input from an external device to a paper medium. Since the image data output once is often re-output or output to another image formation apparatus, the image formation apparatus is capable of storing the image data in an internal memory, an HDD (hard disk drive) or the like and also copying or moving the stored image data to an external device or a storage medium such as a CD or a DVD.

In regard of image data storage, there is disclosed in, for example, Japanese Patent Application Laid-Open No. 2002-169674 an image processing apparatus configured as follows. The information processing apparatus acquires a list of print format information stored in an output device (a printer), designates predetermined print format information by the acquired list, generates print data associated with the designated print format information, and stores or outputs the generated print data in the output device.

There is also disclosed in, for example, Japanese Patent Application Laid-Open No. 2005-198064 a file management program configured as follows. When an icon of one folder displayed on a display device is dragged and dropped to an icon of another folder, a new folder is created in the same hierarchy as that of the icon-dragged and dropped folder, and shortcut files of files stored in the both folders are stored in the newly created folder.

With the technique disclosed in the Japanese Patent Application Laid-Open No. 2002-169674, boxes are displayed in parallel to improve organization and viewing states of printed matters. Due to this, it is disadvantageously necessary to separately provide another configuration for user management so as to manage the printed matters for every user.

With the technique disclosed in the Japanese Patent Application Laid-Open No. 2005-198064, a user need to know hierarchy levels of a copying source or moving source and those of copying destination or moving destination when a box is copied or moved. Due to this, if the box is copied or moved to a different hierarchy level, operation after copying or moving cannot be disadvantageously ensured.

### SUMMARY OF THE INVENTION

The present invention has been made in view of the conventional problems. It is a main object of the present invention to provide a data management apparatus, a computer readable medium, and a control method capable of copying or moving data without destroying a data hierarchical structure.

To attain the object, according to a first aspect of the present invention, there is provided a data management apparatus for managing file data including image data or print data by a hierarchical structure, comprising: an operating unit to designate a save source directory at a save source and a save destination directory at a save destination; and a control unit to copy or move the designated save source directory as well as the file data included in the save source directory to the save destination directory, wherein if the save destination directory is on a higher hierarchy level than an upper directory directly including the save source directory, then the control unit copies or moves the save source directory with maintaining the upper directory.

According to the first aspect of the present invention, data can be copied or moved without destroying a data hierarchical structure.

The reason is as follows. If file data stored in a save source such as a storage unit of the image formation apparatus is to be copied or moved to a save destination such as the external storage unit or the recording medium, the control unit of the image formation apparatus or a control device controlling the image formation apparatus or a control program controls copying or moving according to a preset rule. For example, if a save source directory is in a higher hierarchy than a higher directory including a save source directory, then the higher directory is maintained, and the save source directory or file data is copied or moved.

It is preferable that if a directory of a same name as a name of the upper directory is not present under the save destination directory, then the control unit newly creates the directory of the same name as the name of the upper directory to copy and move the save source directory.

It is preferable that if a directory of a same name as a name of the upper directory is present under the save destination directory, then the control unit copies or moves the save source directory to the directory of the same name.

It is preferable that if the save destination directory is on a hierarchy level higher by two levels than the save source directory, then the control unit copies or moves the save source directory with maintaining a directory on a hierarchy level higher by one level than the save source directory.

It is preferable that if the save destination directory is on a hierarchy level as same as the save source directory, the control unit copies or moves a directory under the save source directory on a lower hierarchy level than the save source directory.

It is preferable that the data management apparatus is an image formation apparatus, the save source is a memory or a hard disk of the image formation apparatus, and the save destination is one of the memory or the hard disk of the image formation apparatus, a computer readable recording medium, and a device connected to the image formation apparatus via a communication network.

According to a second aspect of the present invention, there is provided a data management apparatus for managing file data including image data or print data by a hierarchical structure, comprising: an operating unit to designate save source file data at a save source and a save destination directory at a save destination; and a control unit to copy and move the designated save source file data to the save destination directory, wherein if the save destination directory is on a higher hierarchy level than an upper directory directly including the save source file data, then the control unit copies or moves the save source file data with maintaining the upper directory.

According to the second aspect of the present invention, data can be copied or moved without destroying a data hierarchical structure.

It is preferable that if a directory of a same name as a name of the upper directory is not present under the save destination directory, then the control unit newly creates the directory of the same name as the name of the upper directory to copy and move the save source file data.

It is preferable that if a directory of a same name as a name of the upper directory is present under the save destination directory, then the control unit copies or moves the save source file data to the directory of the same name.

It is preferable that if the save destination directory is on a hierarchy level higher by two levels than the save source file data, then the control unit copies or moves the save source file data with maintaining a directory on a hierarchy level higher by one level than the save source file data.

It is preferable that the data management apparatus is an image formation apparatus, the save source is a memory or a hard disk of the image formation apparatus, and the save destination is one of the memory or the hard disk of the image formation apparatus, a computer readable recording medium, and a device connected to the image formation apparatus via a communication network.

According to a third aspect of the present invention, there is provided a control method for a data management apparatus managing file data including image data or print data by a hierarchical structure, comprising: a first step of accepting designation of a save source directory at a save source and a save destination directory at a save destination; and a second step of copying or moving the designated save source directory as well as the file data included in the save source directory to the save destination directory, wherein at the second step, if the save destination directory is on a higher hierarchy level than an upper directory directly including the save source directory, then the save source directory is copied or moved with maintaining the upper directory.

According to the third aspect of the present invention, data can be copied or moved without destroying a data hierarchical structure.

It is preferable that in the second step, if a directory of a same name as a name of the upper directory is not present under the save destination directory, then the directory of the same name as the name of the higher directory is newly created to copy and move the save source directory.

It is preferable that in the second step, if a directory of a same name as a name of the upper directory is present under the save destination directory, then the save source directory is copied or moved to the directory in the same name.

According to a fourth aspect of the present invention, there is provided a control method for a data management apparatus managing file data including image data or print data by a hierarchical structure, comprising: a first step of accepting designation of a save source file data at a save source and a save destination directory at a save destination; and a second step of copying or moving the designated save source file data to the save destination directory, wherein in the second step, if the save destination directory is on a higher hierarchy level than an upper directory directly including the save source file data, then the save source file data is copied or moved with maintaining the upper directory.

According to the fourth aspect of the present invention, data can be copied or moved without destroying a data hierarchical structure.

It is preferable that in the second step, if a directory of a same name as a name of the upper directory is not present under the save destination directory, then the directory in the same name as the name of the upper directory is newly created to copy and move the save source file data.

It is preferable that in the second step, if a directory of a same name as a name of the upper directory is present under the save destination directory, then the save source file data is copied or moved to the directory in the same name.

According to a fifth aspect of the present invention, there is provided a control program causing a computer of a data management apparatus managing file data including image data or print data by a hierarchical structure, to execute: a first function of accepting designation of a save source directory at a save source and a save destination directory at a save destination; and a second function of copying or moving the designated save source directory as well as the file data included in the save source directory to the save destination directory, wherein in the second function, if the save destination directory is on a higher hierarchy level than an upper directory directly including the save source directory, then the save source directory is copied or moved with maintaining the upper directory.

According to the fifth aspect of the present invention, data can be copied or moved without destroying a data hierarchical structure.

According to a sixth aspect of the present invention, there is provided a control program causing a computer of a data management apparatus managing file data including image data or print data by a hierarchical structure, to execute: a first function of accepting designation of a save source file data and a save destination directory; and a second function of copying or moving the designated save source file data to the save destination directory, wherein in the second function, if the save destination directory is on a higher hierarchy level than an upper directory including the save source file data, then the save source file data is copied or moved with maintaining the upper directory.

According to the sixth aspect of the present invention, data can be copied or moved without destroying a data hierarchical structure.

As can be understood, according to the present invention, since the directory or file data can be copied or moved based on hierarchies of save source directories and save destination directories according to a preset rule, copying or moving of the directory or file data can be executed without destroying the data hierarchical structure.

### BRIEF DESCRIPTION OF THE DRAWINGS

The present invention could be completely understood by the following detailed description and the accompanying drawings. However, these are not intended to limit the present invention, wherein
FIG. 1 is a pattern diagram showing a configuration of an image formation apparatus according to an embodiment of the present invention;
FIG. 2 is a pattern diagram showing a configuration of a system including the image formation apparatus according to the embodiment of the present invention;
FIG. 3 is a pattern diagram showing a configuration of a system including the image formation apparatus according to the embodiment of the present invention;
FIG. 4 is a pattern diagram showing a configuration of a system including the image formation apparatus according to the embodiment of the present invention;
FIG. 5 is a block diagram showing the configuration of the image formation apparatus according to the embodiment of the present invention;
FIG. 6A shows an example of a configuration of a screen displayed on a display unit of the image formation apparatus according to the embodiment of the present invention;
FIG. 6B shows an example of a configuration of a screen displayed on the display unit of the image formation apparatus according to the embodiment of the present invention;
FIGs. 7A-7C are a flowchart showing a copying or moving procedure (Root To Root Copy) using the image formation apparatus according to the embodiment of the present invention;
FIGs. 8A-8B are a flowchart showing a copying or moving procedure (User To Root Copy) using the image formation apparatus according to the embodiment of the present invention;
FIGs. 9A-9B are a flowchart showing a copying or moving procedure (User To User Copy) using the image formation apparatus according to the embodiment of the present invention;
FIGs. 10A-10B are a flowchart showing a copying or moving procedure (Box To Root Copy) using the image formation apparatus according to the embodiment of the present invention;
FIGs. 11A-11B are a flowchart showing a copying or moving procedure (Box To User Copy) using the image formation apparatus according to the embodiment of the present invention;
FIG. 12 is a flowchart showing a copying or moving procedure (Box To Box Copy) using the image formation apparatus according to the embodiment of the present invention;
FIGs. 13A-13B are a flowchart showing a copying or moving procedure (File To Root Copy) using the image formation apparatus according to the embodiment of the present invention;
FIGs. 14A-14B are a flowchart showing a copying or moving procedure (File To User Copy) using the image formation apparatus according to the embodiment of the present invention;
FIG. 15 is a flowchart showing a copying or moving procedure (File To Box Copy) using the image formation apparatus according to the embodiment of the present invention;
FIG. 16 is a flowchart showing a copying or moving procedure (File To File Copy) using the image formation apparatus according to the embodiment of the present invention;
FIG. 17 shows an example of hierarchies of a save source and a save destination in case of Root To Root Copy;
FIGS. 18A-18BA shows an example of hierarchies of a save source and a save destination in case of User To Root Copy;

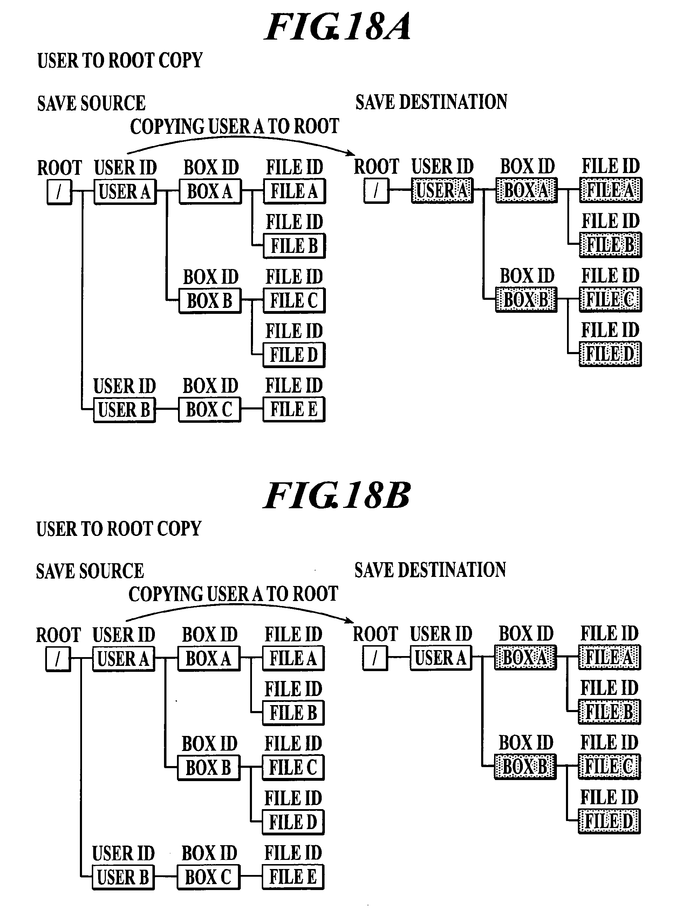

FIGS. 18A-18BB shows an example of hierarchies of a save source and a save destination in case of User To Root Copy;

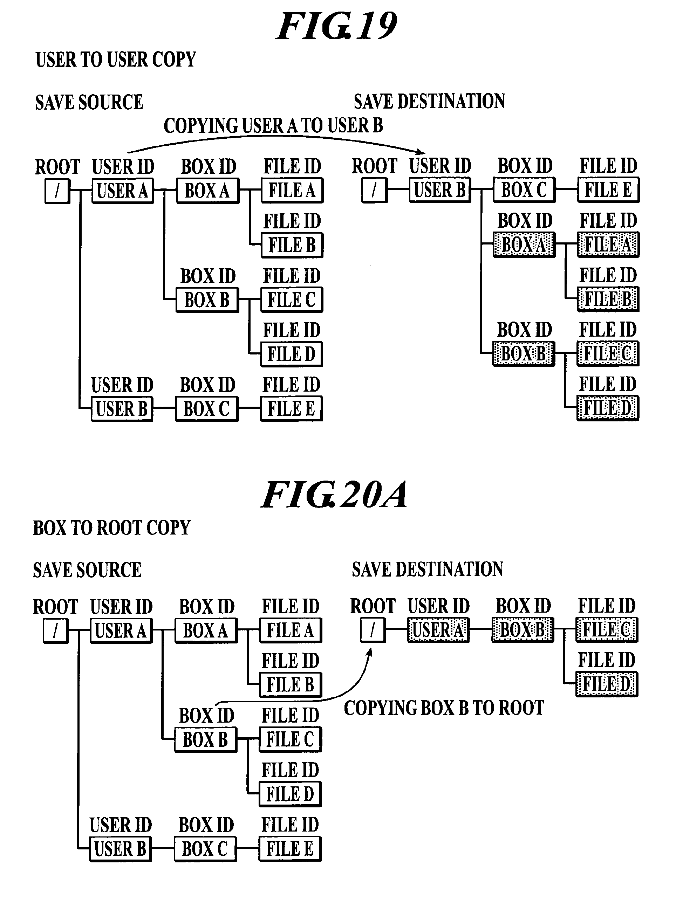

FIG. 19 shows an example of hierarchies of a save source and a save destination in case of User To User Copy;
FIGs. 20A-20C show examples of hierarchies of a save source and a save destination in case of Box To Root Copy;

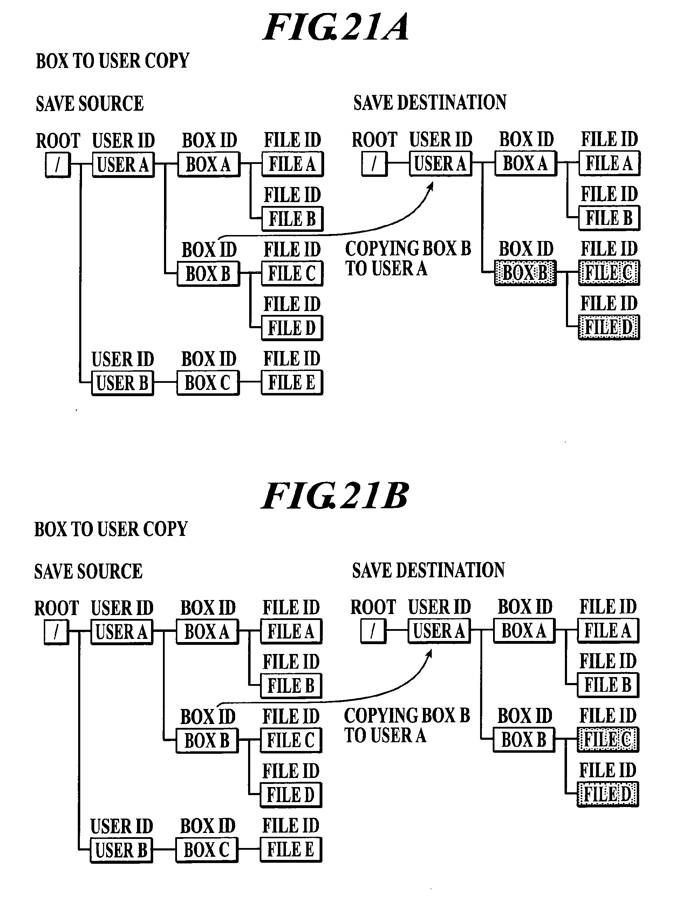

FIGs. 21A-20B show examples of hierarchies of a save source and a save destination in case of Box To User Copy;

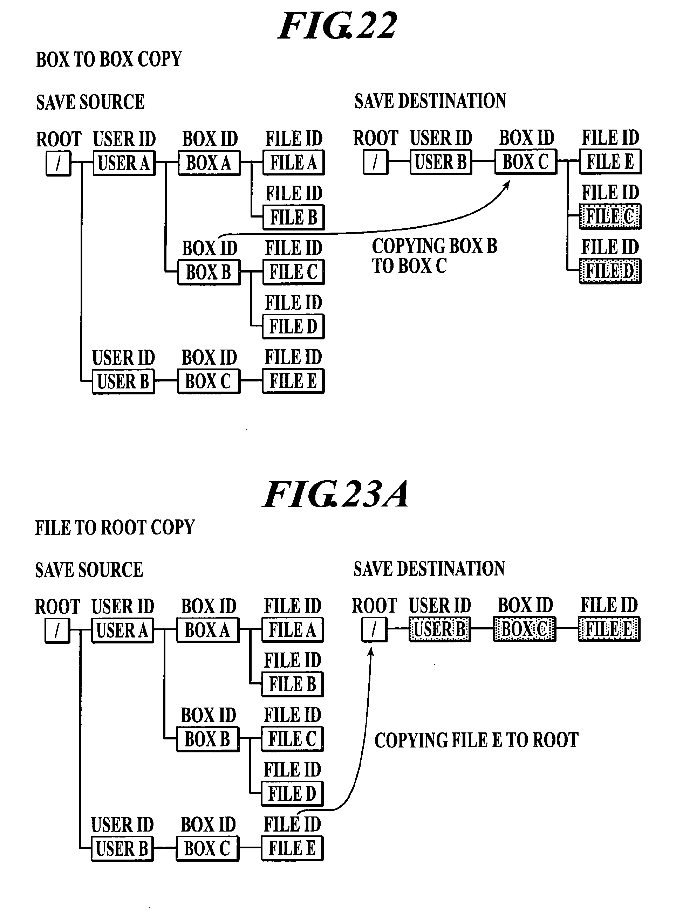

FIG. 22 shows an example of hierarchies of a save source and a save destination in case of Box To Box Copy;
FIGs. 23A-23C show examples of hierarchies of a save source and a save destination in case of File To Root Copy;

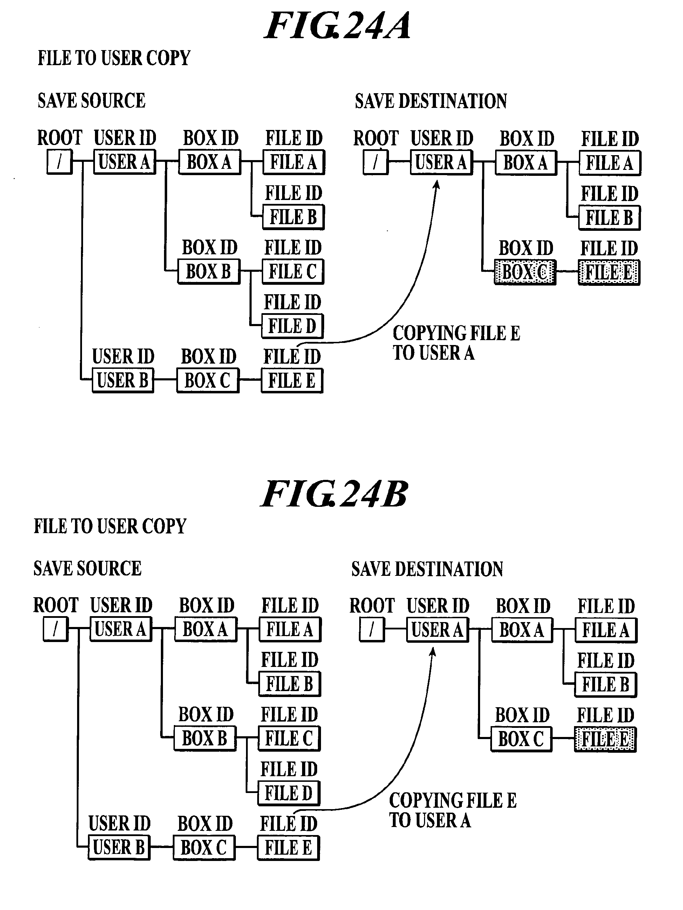

FIGs. 24A-24B show examples of hierarchies of a save source and a save destination in case of File To User Copy;

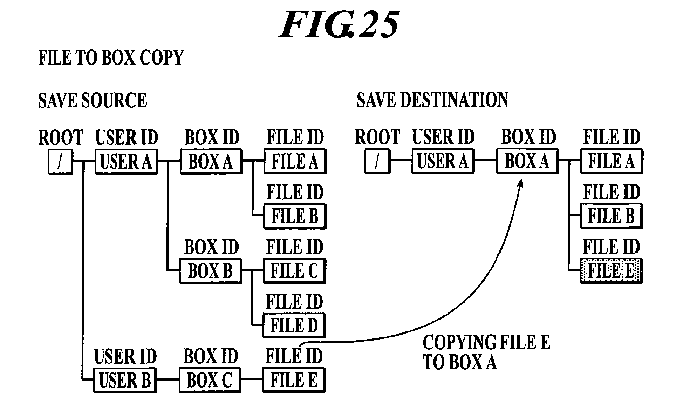

FIG. 25 shows an example of hierarchies of a save source and a save destination in case of File To Box Copy; and

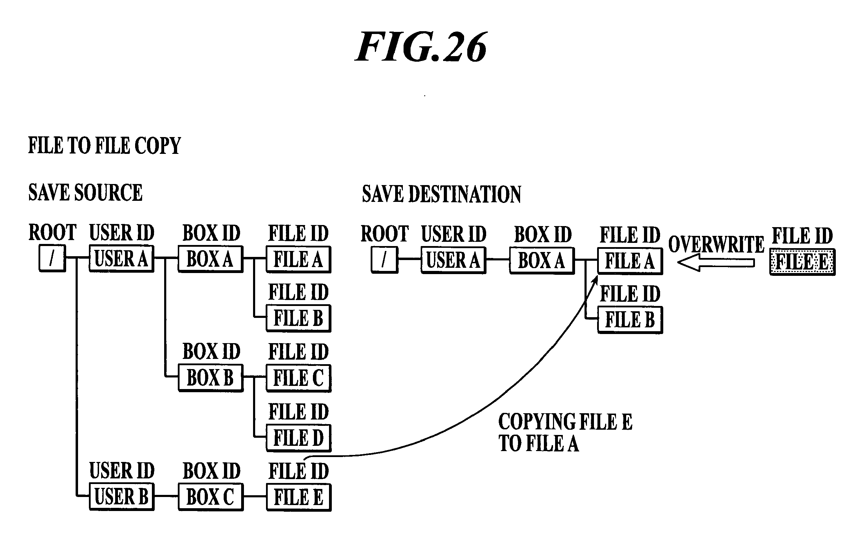

FIG. 26 shows an example of hierarchies of a save source and a save destination in case of File To File Copy.

### DETAILED DESCRIPTION OF THE PREFERRED EMBODIMENTS

According to one preferred aspect of the present invention, an image formation apparatus includes at least a scanner unit acquiring image data; a printer unit executing a processing based on the image data; a storage unit storing file data such as the image data and print data by a hierarchical structure; a operating unit designating a save source directory or a save destination directory; and a control unit. The control unit exerts control for copying or moving a directory or file data without destroying the hierarchical structure based on hierarchies of save source directories and save destination directories according to a preset rule when the file data stored in a save source such as a storage unit is copied or moved to a save destination such as an external storage unit, a detachable computer-readable storage medium, or an external device or a server connected to the image formation apparatus via a communication network.

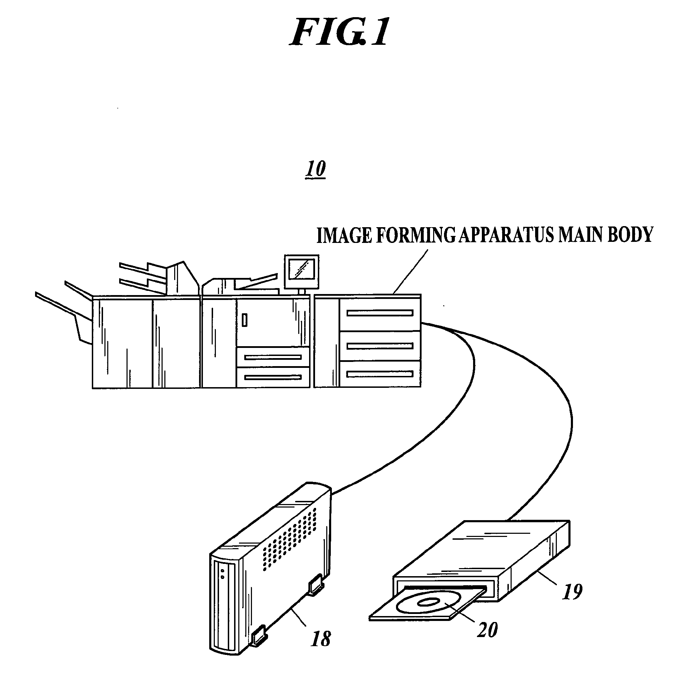

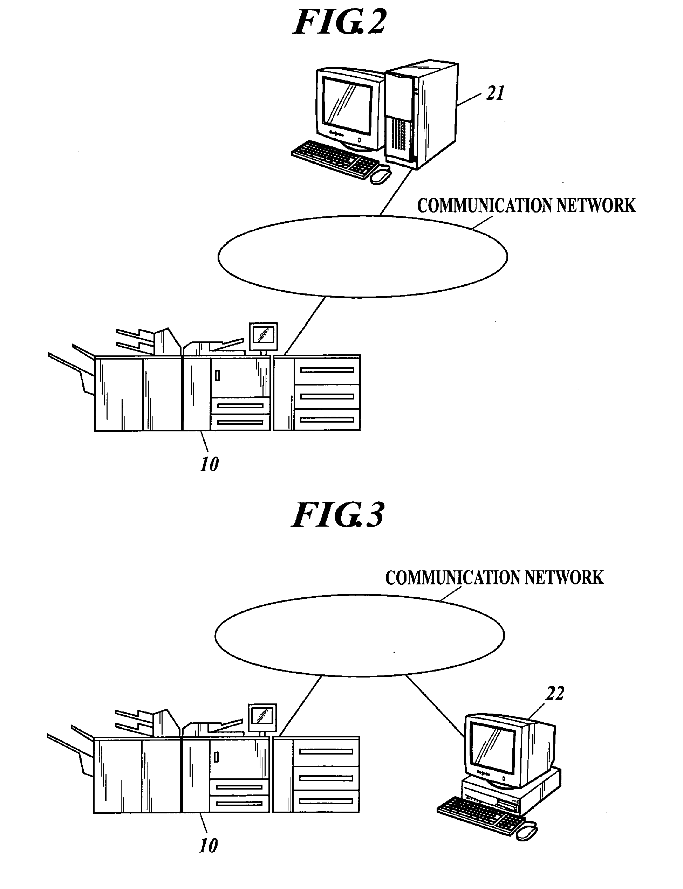

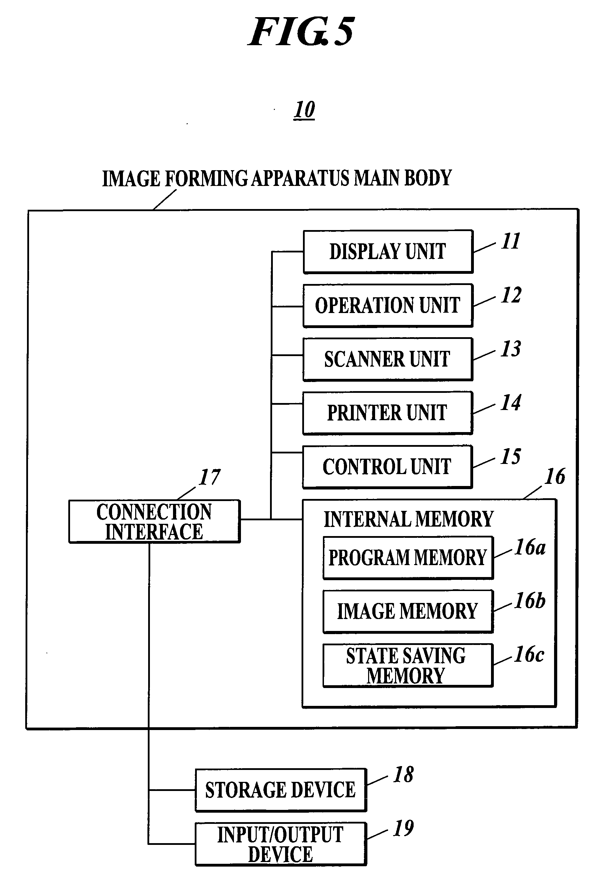

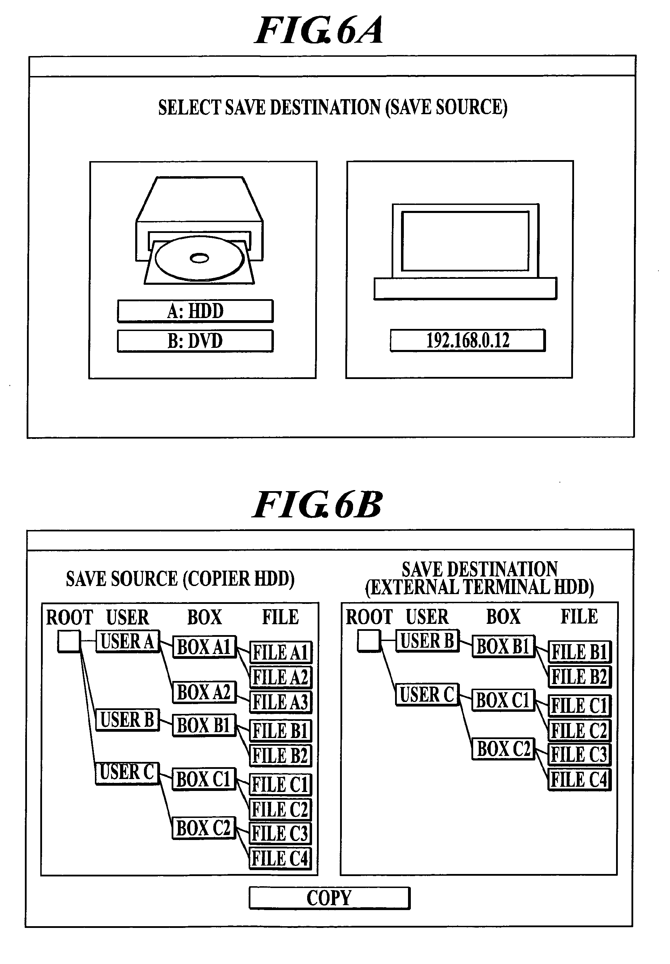

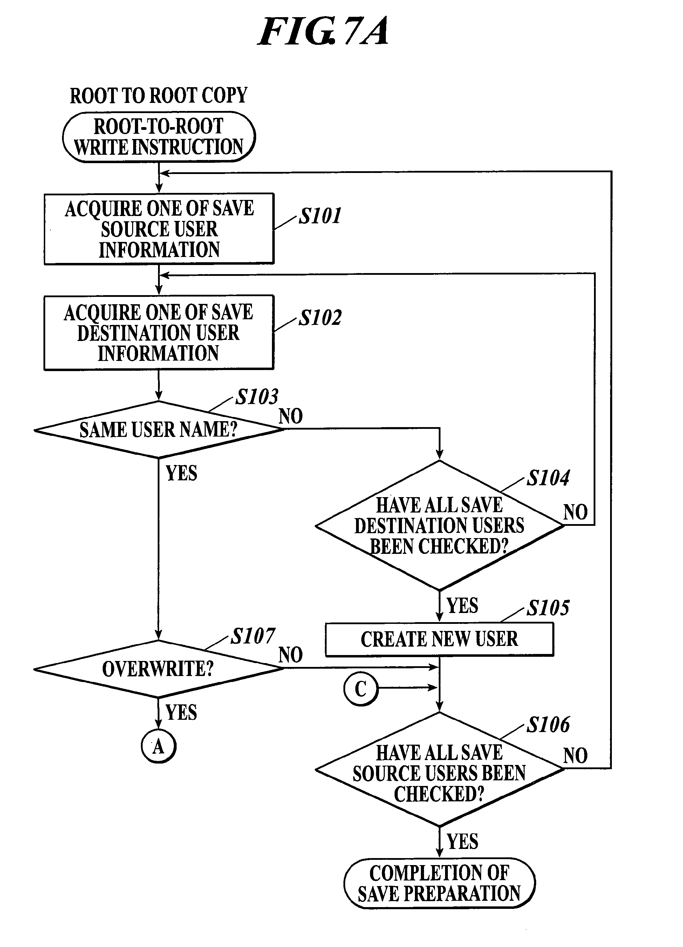

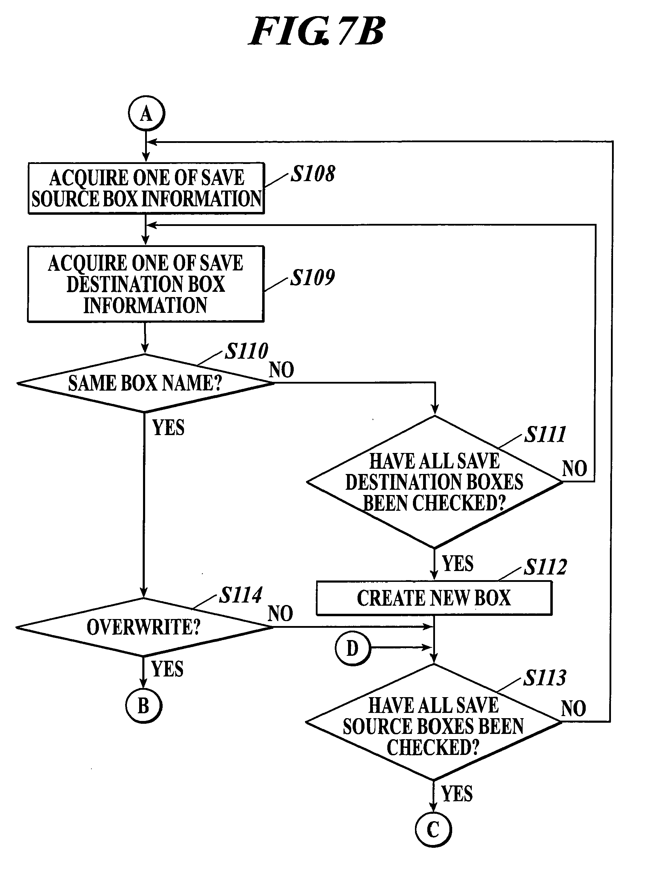

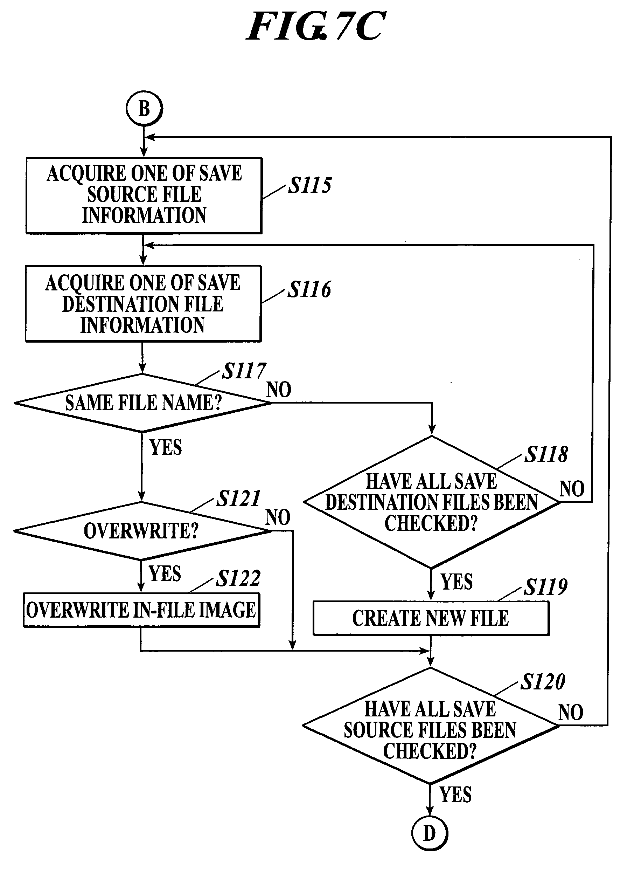

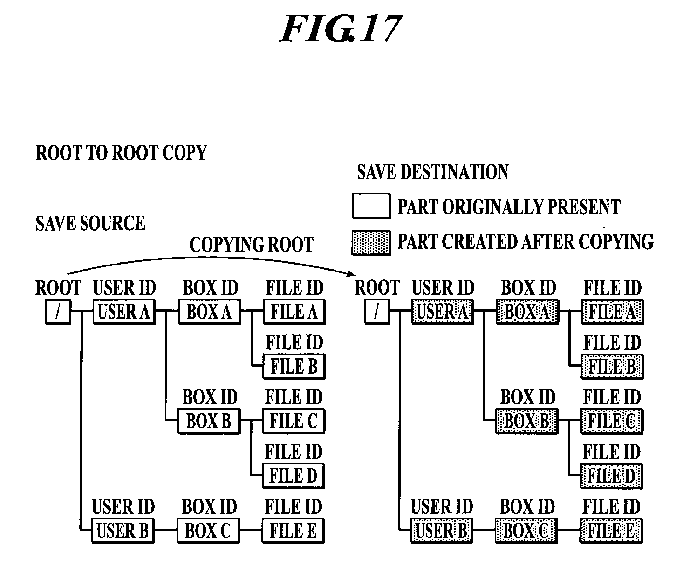

To describe the aspect of the present invention in more detail, a data management apparatus, a storage medium, and a control method according to an embodiment of the present invention will be described with reference to Figs. 1 to 26. FIG. 1 is a pattern diagram showing a configuration of the image formation apparatus according to the embodiment. Figs. 2 to 4 are pattern diagrams showing a configuration of a control system according to the embodiment. FIG. 5 is a block diagram showing a configuration of the image formation apparatus. Figs. 6A and 6B show examples of a configuration of a screen displayed on a display unit of the image formation apparatus according to the embodiment. Figs. 7 to 16 are flowcharts showing data copying or moving procedures using the image formation apparatus according to the embodiment. Figs. 17 to 26 show hierarchical structures of save source and save destination.

As shown in Figs. 1 and 5, an image formation apparatus 10 according to the embodiment includes a display unit 11 such as an LCD (Liquid Crystal Display) displaying a screen or the like for copying or moving data, an operating unit 12 instructing data copying or moving, a scanner unit 13 reading an original using an imaging unit such as a CCD (Charge Coupled Device) image sensor, performing an analog processing, an A/D conversion, a shading correction, an image compression processing and the like on a photoelectrically converted analog signal, and acquiring image data, a printer unit 14 irradiating a photosensitive drum with semiconductor laser beam to form a latent image based on the image data acquired by the scanner unit 13, and developing the latent image to form a toner image on the photosensitive drum, and transferring the toner image onto a paper medium, a control unit 15 constituted by a CPU (Central Processing Unit) and the like and exerting various controls, an internal memory 16 constituted by a ROM (Read-Only Memory), a RAM (Random-Access Memory) or the like and including a program memory 16a storing therein programs, an image memory 16b storing therein file data such as image data and print data by a predetermined hierarchical structure, and a state saving memory 16c storing therein a state of the image formation apparatus 10, a connection interface 17 connecting the image formation apparatus 10 to a storage device 18 or an input/output device 19, the storage device 18 such as an external HDD storing therein the image data, the print data or the like, the input/output device 19 storing the file data such as the image data and the print data in an optical disk such as a CD, a DVD, an HD-DVD or a Blue-Ray, a magneto-optical disk such as an MO (Magneto-Optical), a semiconductor memory such as a compact flash (registered trademark), a smart media, an SD card or a memory stick (hereinafter, "recording medium 20"), and the like.

In Figs. 1 and 5, the configuration of the image formation apparatus 10 including both the storage device 18 and the input/output device 19 is shown. Alternatively, the image formation apparatus 10 may include only one of the storage device 18 and the input/output device 19. In another alternative, the storage device 18 and the input/output device 19 may be either external devices externally attached to an image formation apparatus main body or internal devices included in the image formation apparatus 10. Furthermore, while FIG. 5 shows that the display unit 11 and the operating unit 12 are provided separately, a touch panel or the like for performing operations on the screen may be provided to function as the display unit 11 and the operating unit 12.

The operating unit 15 executes copying or moving without destroying a data hierarchical structure according to a preset rule when the file data such as the image data or the print data stored in a save source (e.g., the image memory 16b or the storage device 18) is copied or moved to a save destination (e.g., the recording medium 20). The control unit 15 may be realized as hardware, and a computer may be configured so that a control program functions as the control unit 15 and expanded on the program memory 16a to function as the control unit 15. By including the control unit 15, the image formation apparatus 10 functions as a data management apparatus.

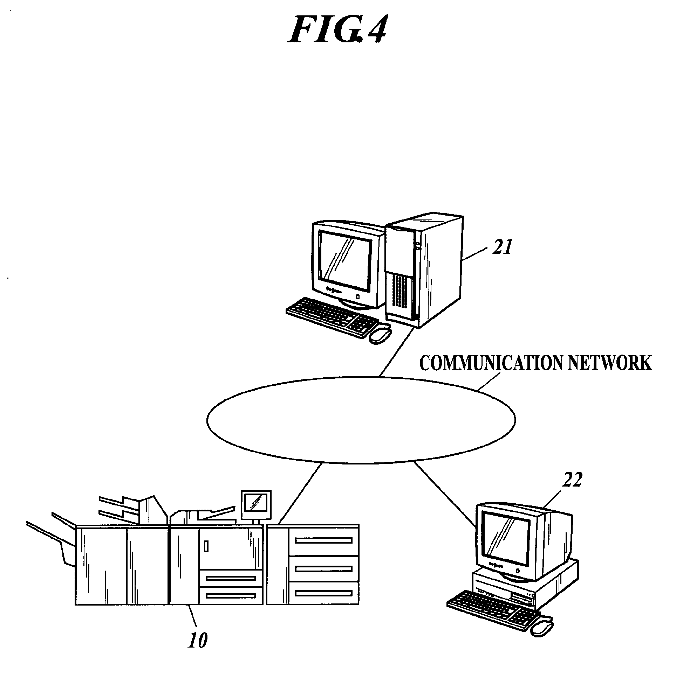

FIG. 1 shows only the image formation apparatus 10. Alternatively, as shown in FIG. 2, a control device 21 controlling the image formation apparatus 10 may be connected to the image formation apparatus 10 via a communication network such as a LAN (Local Area Network) or a WAN (Wide Area Network), the control unit 15 may be provided in the control device 21 as hardware or software, and the control device 21 may be allowed to function as the data management apparatus. In another alternative, as shown in FIG. 3, a computer terminal 22 such as a personal computer or a server may be connected to the image formation apparatus 10 via the communication network, and the image data or the print data stored in the internal memory 16 of the image formation apparatus 10, the storage device 18 or the like may be copied or moved to an HDD or the like of the computer terminal 22. In yet another alternative, as shown in FIG. 4, the image formation apparatus 10, the control device 21, and the computer terminal 22 may be connected to one another by the communication network, and the image data stored in the internal memory 16 of the image formation apparatus 10, the storage device 18 or the like may be copied or moved to the HDD or the like of the computer terminal 22 according to an instruction of the control device 21.

In this case, a mechanism for storing the image data acquired by the scanner unit 13 or the image data received from the computer terminal 22 or the like via the communication network in the internal memory 16 or the storage device 18 together with print setting data is present. The stored data is called "print jobs (print data)", and classified into categories (boxes) according to owner information (users) or users. In the embodiment, the print jobs are stored in a hierarchical structure of users, boxes, and files.

Conventionally, if the data stored in the save source (e.g., the internal memory 16 or the storage device 18) is to be stored in the save destination (e.g., the recording medium 20 or a storage unit of the computer terminal 22) in the hierarchical structure, each user instructs which of the directories in the save source is copied or moved to which of the directories in the save destination. Due to this, a data hierarchical structure of the save destination may be possibly and disadvantageously destroyed by user's malfunction. To solve the conventional problem, according to the embodiment, if a directory of the save destination is in a higher hierarchy than that of a higher directory including a directory of the save source, the control unit 15 controls copying or moving according to a rule to be described later based on hierarchies of the directories of the save source and those of the save destination to, for example, maintain the higher directory and copy or move the directory or the file data of the save source.

Specifically, if the user performs a predetermined operation on the operating unit 12 of the image formation apparatus 10, a screen for selecting the save source and the save destination is displayed as shown in FIG. 6A. If the user selects the save source and the save destination, a screen showing data hierarchical structures of the save source and the save destination is displayed as shown in FIG. 6B. If the user designates the save source and the save destination and depresses a COPY button, copying or moving is executed without destroying the data hierarchical structures.

For example, the save source (e.g., the HDD of the image formation apparatus) includes three sub-directories UserA to UserC in a lower hierarchy than a Root directory, sub-directories BoxA1 to BoxA2 in a lower hierarchy than the UserA directory, a sub-directory BoxB1 in a lower hierarchy than the UserB directory, and sub-directories BoxC1 to BoxC2 in a lower hierarchy than the UserC directory. Further, the save source includes file data FileA1 to FileA2 in a lower hierarchy than the BoxA1 directory, file data FileA3 in a lower hierarchy than the BoxA2 directory, file data FileB1 to FileB2 in a lower hierarchy than the BoxB1 directory, file data FileC1 to FileC2 in a lower hierarchy than the BoxC1 directory, and file data FileC3 to FileC4 in a lower hierarchy than the BoxC2 directory. In this case, if the file data FileB1 to FileB2 and FileC1 to FileC4 are instructed to be copied or moved, the file data FileB1 to FileB2 and FileC1 to FileC4 are not simply copied or moved to the save destination (e.g., the HDD of the computer terminal 22) but are copied or moved according to the BoxB1 directory in the higher hierarchy than the files FileB1 to FileB2 and the UserB directory in the higher hierarchy than the BoxB1 directory, and the BoxC1 to BoxC2 directories in the higher hierarchy than the files FileC1 to FileC4 and the UserC directory in the higher hierarchy than the BoxC1 to BoxC2 directories, respectively. It is thereby possible to copy or move the file data FileB1 to FileB2 and FileC1 to FileC4 without destroying the data hierarchical structure due to user's malfunction.

Copying or moving procedures according to the embodiment will be described separately according to the hierarchies of the directories of the save source and those of the save destination. It is assumed that the save source is the storage device 18 of the image formation apparatus 10 and the save destination is the HDD of the computer terminal 22. However, it suffices that the save source has the hierarchical structure of users, boxes, and files and that the save destination may include the hierarchical structure of users, boxes, and files, and the save source and the save destination can be arbitrarily selected. Furthermore, the save source and the save destination are not necessarily different but may be the same, for example, by copying or moving data from the storage device 18 to the storage device 18. Moreover, while instances of copying or moving image data will be described, copying or moving target data is not limited to the image data but may be any data available for printing.

### [Root To Root Copy]

First, an instance of copying or moving a root directory of the save source to that of the save destination will be described with reference to the flowchart of FIGS. 7A-7C.

If a user designates the save source and the save destination and issues a Root To Root write instruction, then the control unit 15 acquires one of save source user information (e.g., a name of a user directory created in the save source in advance) at a step S101, and acquires one of save destination user information (e.g., a name of a user directory created in the save destination in advance) at a step S102.

Next, the control unit 15 determines whether the user information acquired at the steps S101 and S102 is the same at a step S103. If the user information is not the same, the control unit 15 determines whether all save destination user information has been checked at a step S104. If the save destination includes unchecked user information, then the processing returns to the step S102, the control unit 15 acquires another save destination user information, and the same processing is repeated.

On the other hand, if all the save destination user information has been checked, the save source user information acquired at the step S101 is not present in the hierarchies of save destination user directories. Therefore, the user information is created in the save destination (e.g., a user directory in the name is newly created) at a step S105, and the processing goes to a step S106. If it is determined at the step S103 that the user information is the same, the control unit 15 determines whether to overwrite the save destination user information to the save destination at a step S107. If it is determined not to overwrite, the processing goes to a step S106.

At the step S106, the control unit 15 determines whether all save source user information has been checked. If unchecked user information is present in the save source, then the processing returns to the step S101, the control unit 15 acquires another save source user information, and the same processing is repeated. On the other hand, if it is determined that all the save source user information has been checked, save preparation is completed.

If the save source user information is overwritten to the save destination, it is necessary to check box information present in a lower hierarchy than the user directory. Therefore, the control unit 15 acquires one of save source box information (e.g., a name of a box directory created in the save source in advance) at a step S108, and acquires one of save destination box information (e.g., a name of a box directory created in the save destination in advance) at a step S109.

Next, the control unit 15 determines whether the box information acquired at the steps S108 and S109 is the same at a step S110. If the box information is not the same, the control unit 15 determines whether all save destination box information has been checked at a step S111. If the save destination includes unchecked box information, then the processing returns to the step S109, the control unit 15 acquires another save destination box information, and the same processing is repeated.

On the other hand, if all the save destination box information has been checked, the save source box information is not present in the hierarchies of save destination box directories. Therefore, the box information is created in the save destination (e.g., a box directory in the name is newly created) at a step S112, and the processing goes to a step S113. If it is determined at the step S110 that the acquired box information is the same, the control unit 15 determines whether to overwrite the save source box information to the save destination at a step S114. If it is determined not to overwrite, the processing goes to the step S113.

At the step S113, the control unit 15 determines whether all save source box information has been checked. If unchecked box information is present in the save source, then the processing returns to the step S108, the control unit acquires another save source box information, and the same processing is repeated. On the other hand, if it is determined that all the save source box information has been checked, the processing goes to the step S106.

If the save source box information is overwritten to the save destination, it is necessary to check file information present in a lower hierarchy than the box directory. Therefore, the control unit 15 acquires one of save source file information (e.g., a name of a file stored in the save source in advance) at a step S115, and acquires one of save destination file information (e.g., a name of a file stored in the save destination in advance) at a step S116.

Next, the control unit 15 determines whether the file information acquired at the steps S115 and S116 is the same at a step S117. If the file information is not the same, the control unit 15 determines whether all save destination file information has been checked at a step S118. If the save destination includes unchecked file information, then the processing returns to the step S116, the control unit 15 acquires another save destination file information, and the same processing is repeated.

On the other hand, If all the save destination file information has been checked, the save source file information is not present in the save destination. Therefore, the file information is registered in the save destination (e.g., a file in the name is newly created) at a step S119, and the processing goes to a step S120. If it is determined at the step S117 that the acquired file information is the same, the control unit 15 determines whether to overwrite the save source file information to the save destination at a step S121. If it is determined not to overwrite, the processing goes to the step S120. If it is determined to overwrite, then the file information is overwritten to the save destination, and the processing goes to the step S120.

At the step S120, the control unit 15 determines whether all save source file information has been checked. If unchecked file information is present in the save source, then the processing returns to the step S115, the control unit acquires another save source file information, and the same processing is repeated. On the other hand, if it is determined that all the save source file information has been checked, the processing goes to the step S113.

If the save source Root is copied or moved to the save destination in the flow stated above, then hierarchical structures are those as shown in, for example, FIG. 17. In FIG. 17 (the same shall apply to Figs. 18A to 26), the left side shows the hierarchical structure of the save source and the right side shows that of the save destination after copying or moving. In the hierarchical structure of the save destination, white frames indicate originally present directories and shaded frames indicate directories created after copying or moving. As shown in FIG. 17, directories UserA and UserB are created in a lower hierarchy than the Root directory of the save destination, directories BoxA to BoxB are created in a lower hierarchy than the directory UserA, directory BoxC is created in a lower hierarchy than the directory UserB, directories FileA to FileB are created in a lower hierarchy than the directory BoxA, directories FileC to FileD are created in a lower hierarchy than the directory BoxB, and a directory FileE is created in a lower hierarchy than the directory BoxC.

### [User To Root Copy]

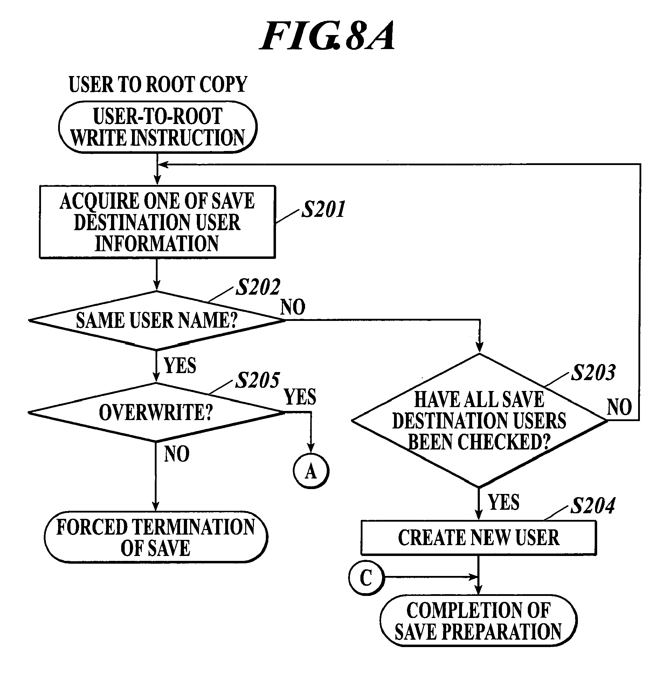

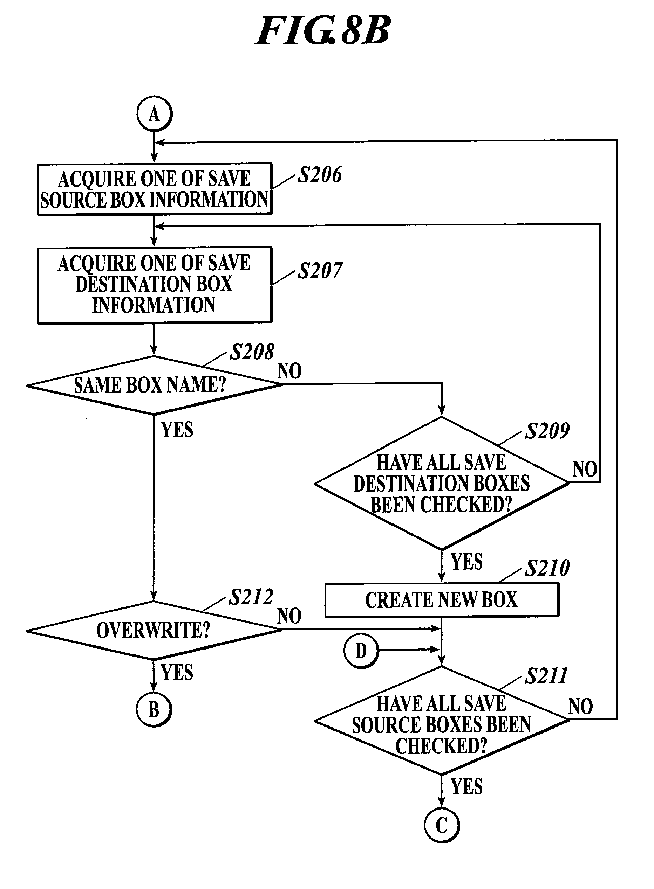

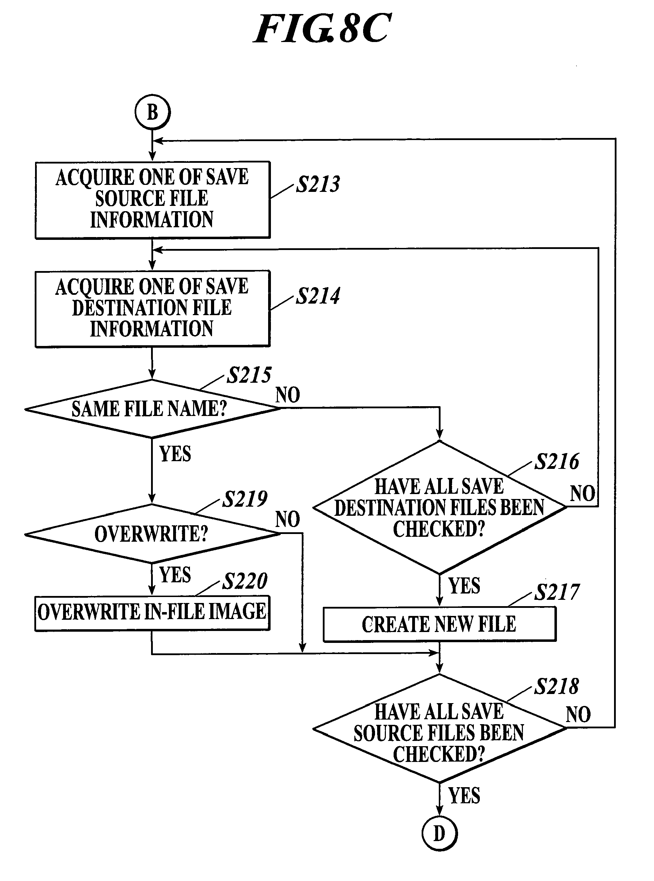

Next, an instance of copying or moving a user directory of the save source to a root directory of the save destination will be described with reference to the flowchart of FIGS. 8A-8C.

If the user designates the save source and the save destination and issues a User To Root write instruction, then the control unit 15 acquires one of save destination user information at a step S201, and determines whether the user information acquired at the step S201 is the same as write target user information at a step S202. If the user information is not the same, the control unit 15 determines whether all save destination user information has been checked at a step S203. If the save destination includes unchecked user information, then the processing returns to the step S201, the control unit 15 acquires another save destination user information, and the same processing is repeated.

On the other hand, If all the save destination user information has been checked, the save source user information acquired at the step S201 is not present in the hierarchies of save destination user directories. Therefore, the user information is created in the save destination at a step S204, and save preparation is completed. If it is determined at the step S201 that the save source user information is the same, the control unit 15 determines whether to overwrite the save source user information to the save destination at a step S205. If it is determined not to overwrite, the user directory cannot be copied or moved; thus forcedly terminating save.

Thereafter, the processing is performed at steps S206 to S220 similarly to the steps S108 to S122 shown in FIGS. 7A-7C.

If the save source UserA is copied or moved to the save destination in the flow stated above, hierarchical structures are those as shown in, for example, FIGS. 18A-18BA. As shown in FIGS. 18A-18BA, directory UserA is created in a lower hierarchy than the Root directory of the save destination, directories BoxA to BoxB are created in a lower hierarchy than the directory UserA, directories FileA to FileB are created in a lower hierarchy than the directory BoxA, and directories FileC to FileD are created in a lower hierarchy than the directory BoxB.

If the UserA is present in the save destination, hierarchical structures are those as shown in, for example, FIGS. 18A-18BB. As shown in FIGS. 18A-18BB, directories BoxA to BoxB are created in a lower hierarchy than the directory UserA originally present in the save destination, directories FileA to FileB are created in a lower hierarchy than the directory BoxA, and directories FileC to FileD are created in a lower hierarchy than the directory BoxB.

### [User To User Copy]

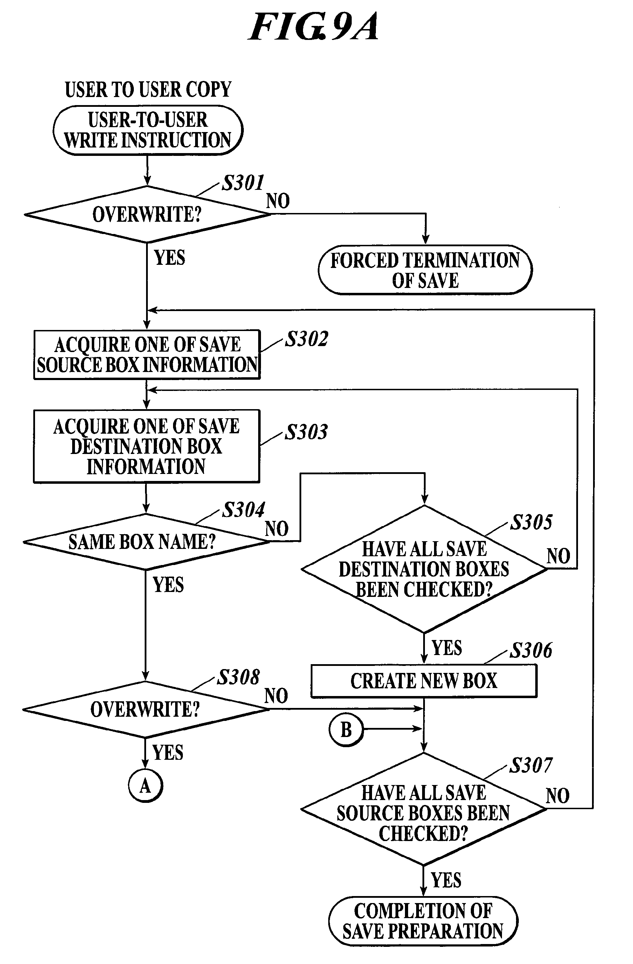

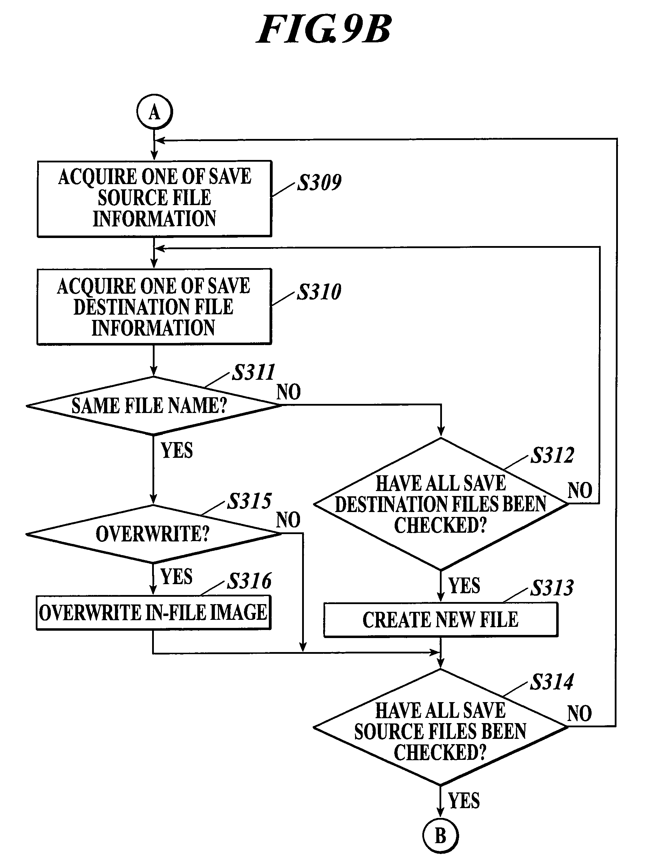

Next, an instance of copying or moving a user directory of the save source to a user directory of the save destination will be described with reference to the flowchart of FIGS. 9A-9B.

If the user designates the save source and the save destination and issues a User To User write instruction, the control unit 15 determines whether to overwrite the save source user information to the save destination at a step S301. If it is determined not to overwrite, the user directory cannot be copied or moved, thus forcedly terminating save.

Thereafter, the processing is performed at steps S302 to S316 similarly to the steps S108 to S122 shown in FIGS. 7A-7C.

If the save source UserA is copied or moved to the save destination in the flow stated above, hierarchical structures are those as shown in, for example, FIG. 19. As shown in FIG. 19, directories BoxA to BoxB are created in a lower hierarchy than a directory UserB originally present in the save destination, directories FileA to FileB are created in a lower hierarchy than the directory BoxA, and directories FileC to FileD are created in a lower hierarchy than the directory BoxB.

### [Box To Root Copy]

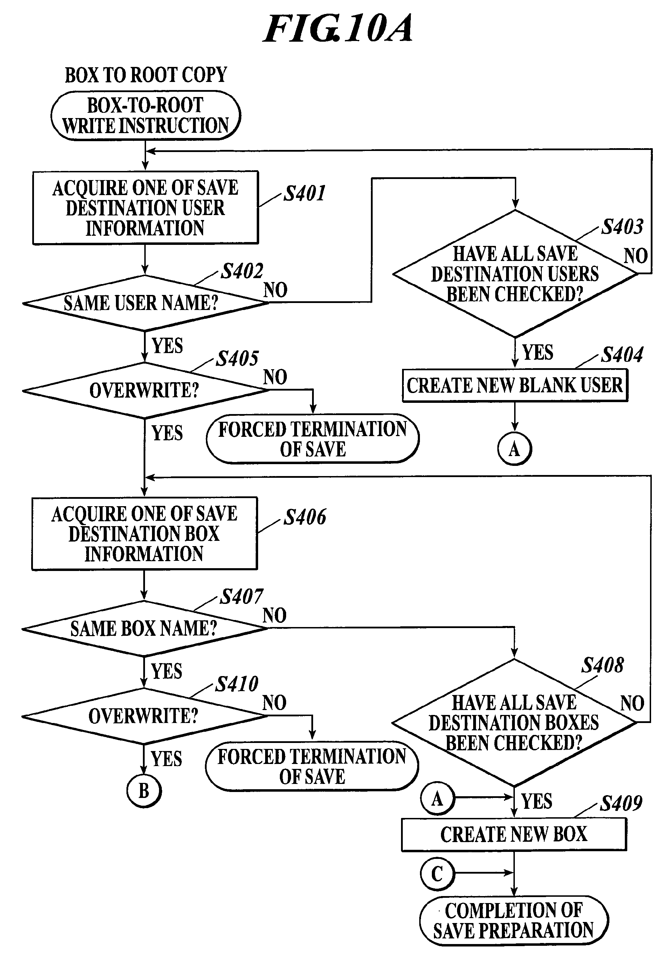

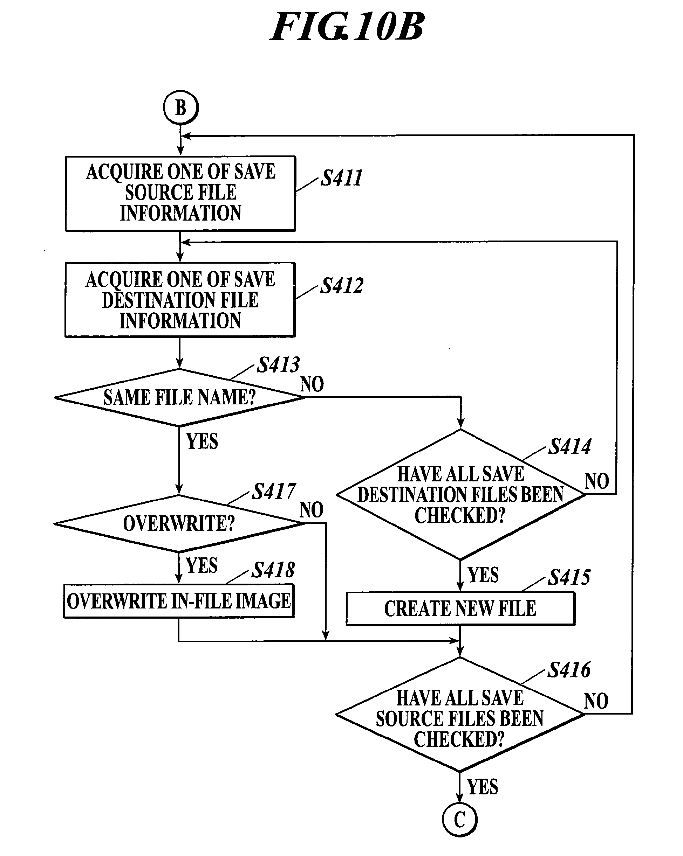

Next, an instance of copying or moving a box directory of the save source to a root directory of the save destination will be described with reference to the flowchart of FIGS. 10A-10B.

If the user designates the save source and the save destination and issues a Box To Root write instruction, then the control unit 15 acquires one of save destination user information at a step S401, and determines whether the user information acquired at the step S401 is the same as user information in a higher hierarchy than a write target box at a step S402. If the user information is not the same, the control unit 15 determines whether all the save destination user information has been checked at a step S403. If the save destination includes unchecked user information, then the processing returns to the step S401, the control unit 15 acquires another save destination user information, and the same processing is repeated.

On the other hand, if all the save destination user information has been checked, the save source user information acquired at the step S401 is not present in the hierarchies of save destination user directories. Therefore, arbitrary user information (which may be either the same as or different from the user information in the higher hierarchy than the write target box) is created in the save destination at a step S404, and the processing goes to a step S409. If it is determined at the step S402 that the user information is the same, the control unit 15 determines whether to overwrite the save source user information to the save destination at a step S405. If it is determined not to overwrite, the user directory cannot be copied or moved, thus forcedly terminating save.

If it is determined to overwrite the save source user information to the save destination, the control unit 15 acquires one of save destination box information at a step S406. The control unit 15 determines whether the box information acquired at the step S406 is the same as the write target box information at a step S407. If the box information is not the same, the control unit 15 determines whether all the save destination box information has been checked at a step S408. If the save destination includes unchecked box information, then the processing returns to the step S406, the control unit 15 acquires another save destination box information, and the same processing is repeated. On the other hand, if all the save destination box information has been checked, the box information is created in the save destination at a step S409, thus completing save preparation. If it is determined at the step S407 that the box information is the same, the control unit 15 determines whether to overwrite the save source box information to the save destination at a step S410. If it is determined not to overwrite, the box directory cannot be copied or moved, thus forcedly terminating save.

Thereafter, the processing is performed at steps S411 to S418 similarly to the steps S115 to S122 shown in FIGS. 7A-7C.

If the save source BoxB is copied or moved to the save destination in the flow stated above, hierarchical structures are those as shown in, for example, FIG. 20A. As shown in FIG. 20A, a directory User A (user information is arbitrary) is created in a lower hierarchy than the Root directory of the save destination, a BoxB is created in a lower hierarchy than the directory UserA, and directories FileC to FileD are created in a lower hierarchy than the directory BoxB.

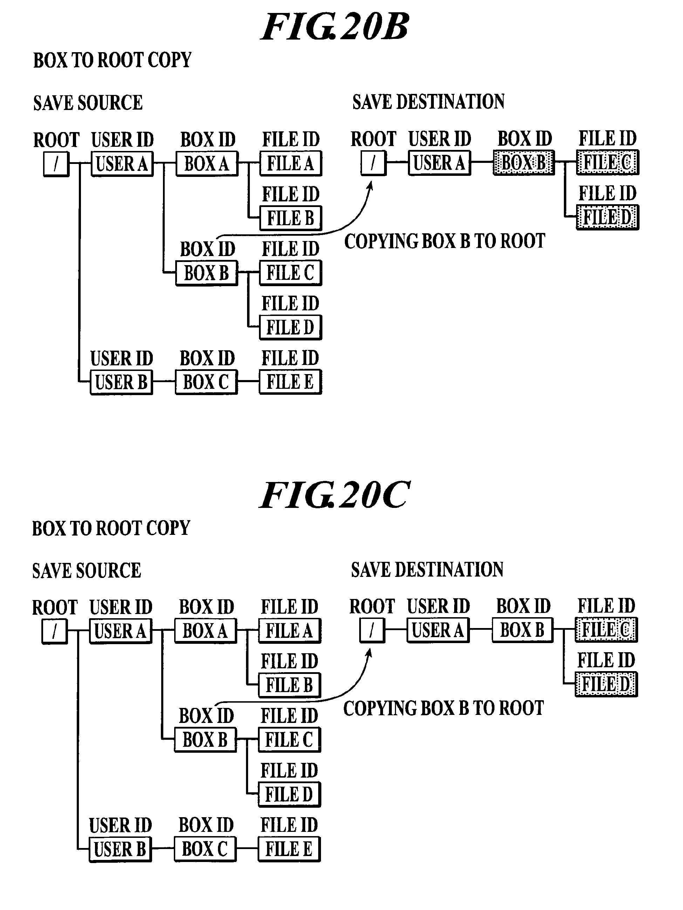

If the UserA presents in the save destination, hierarchical structures are those as shown in, for example, FIG. 20B. As shown in FIG. 20B, a directory BoxB is created in a lower hierarchy than the directory UserA originally present in the save destination, and the directories FileC to FileD are created in a lower hierarchy than the directory BoxB.

If the UserA and BoxB are present in the save destination, hierarchical structures are those as shown in, for example, FIG. 20C. As shown in FIG. 20C, directories FileC to FileD are created in a lower hierarchy than the directories UserA and BoxB originally present in the save destination.

### [Box To User Copy]

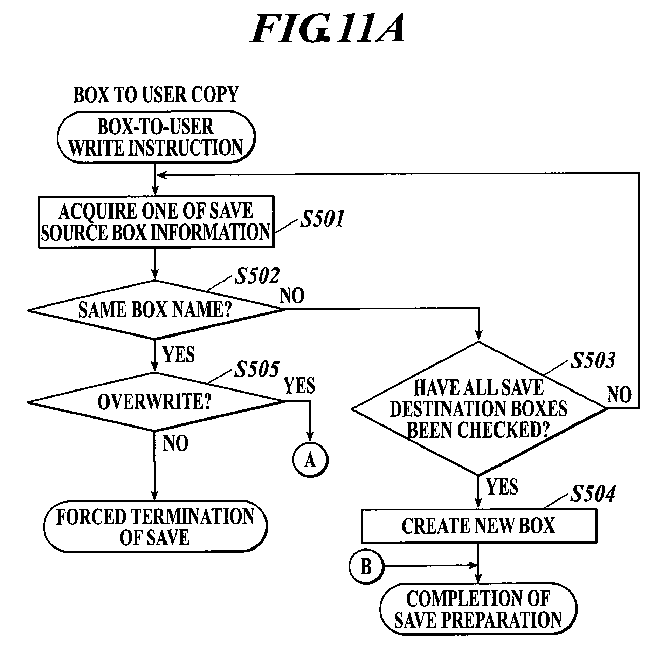

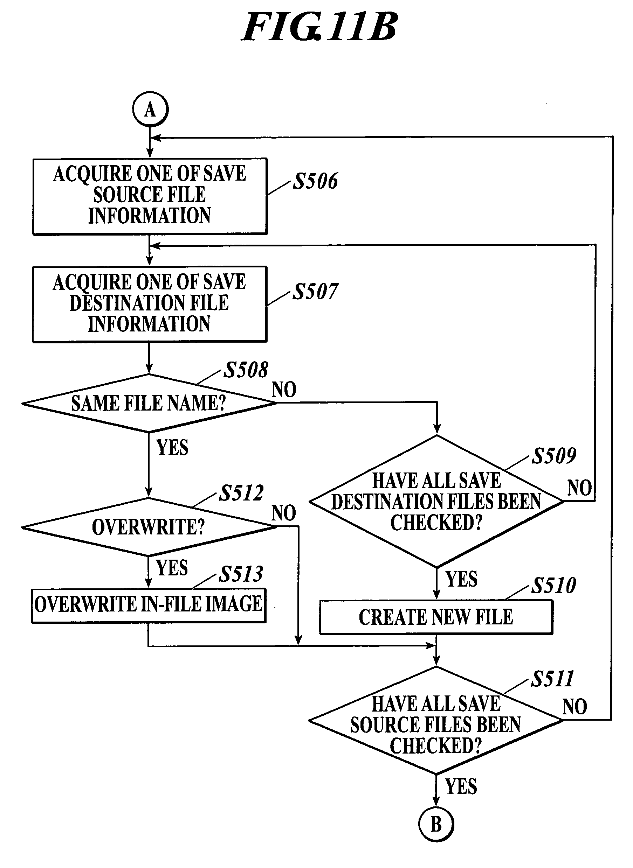

Next, an instance of copying or moving a box directory of the save source to a user directory of the save destination will be described with reference to the flowchart of FIGS. 11A-11B.

If the user designates the save source and the save destination and issues a Box To User write instruction, then the control unit 15 acquires one of save destination box information at a step S501, and determines whether the box information acquired at the step S501 is the same as write target box information at a step S502. If the box information is not the same, the control unit 15 determines whether all the save destination box information has been checked at a step S503. If the save destination includes unchecked box information, then the processing returns to the step S501, the control unit 15 acquires another save destination box information, and the same processing is repeated.

On the other hand, if all the save destination box information has been checked, the save source box information acquired at the step S501 is not present in the hierarchies of save destination box directories. Therefore, the box information is created in the save destination at a step S504, thus completing save preparation. If it is determined at the step S502 that the box information is the same, the control unit 15 determines whether to overwrite the save source box information to the save destination at a step S505. If it is determined not to overwrite, the box directory cannot be copied or moved, thus forcedly terminating save.

Thereafter, the processing is performed at steps S506 to S513 similarly to the steps S411 to S418 shown in FIGS. 10A-10B.

If the save source BoxB is copied or moved to the save destination in the flow stated above, hierarchical structures are those as shown in, for example, FIG. 21A. As shown in FIG. 21A, a BoxB is created in a lower hierarchy than the directory UserA originally present in the save destination, and directories FileC to FileD are created in a lower hierarchy than the directory BoxB.

If the UserA and BoxB are present in the save destination, hierarchical structures are those as shown in, for example, FIG. 21B. As shown in FIG. 21B, directories FileC to FileD are created in a lower hierarchy than the directories UserA and BoxB originally present in the save destination.

### [Box To Box Copy]

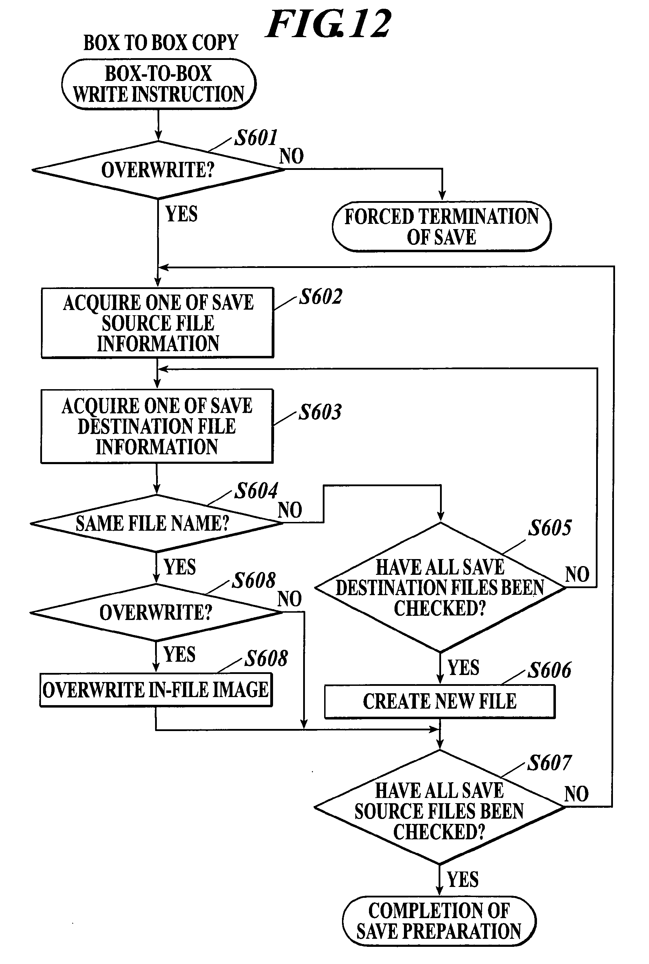

Next, An instance of copying or moving a box directory of the save source to a box directory of the save destination will be described with reference to the flowchart of FIG. 12.

If the user designates the save source and the save destination and issues a Box To Box write instruction, then the control unit 15 determines whether to overwrite save source box information to the save destination at a step S601. If it is determined not to overwrite, the box directory cannot be copied or moved, thus forcedly terminating save.

Thereafter, the processing is performed at steps S602 to S609 similarly to the steps S411 to S418 shown in FIGS. 10A-10B.

If the save source BoxB is copied or moved to the save destination in the flow stated above, hierarchical structures are those as shown in, for example, FIG. 22. As shown in FIG. 22, directories FileC to FileD are created in a lower hierarchy than the directory BoxC originally present in the save destination.

### [File To Root Copy]

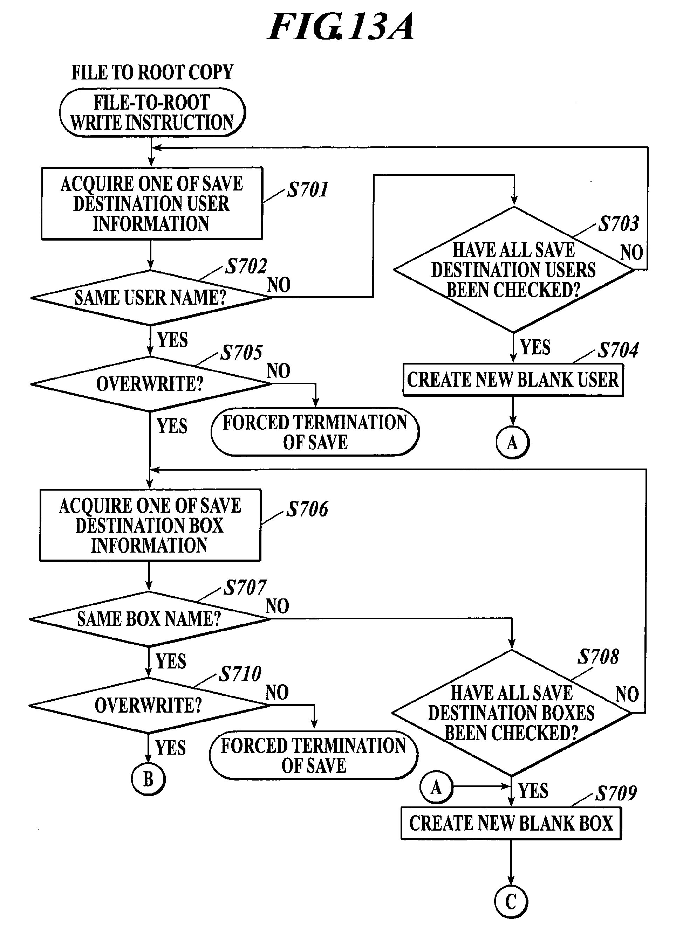

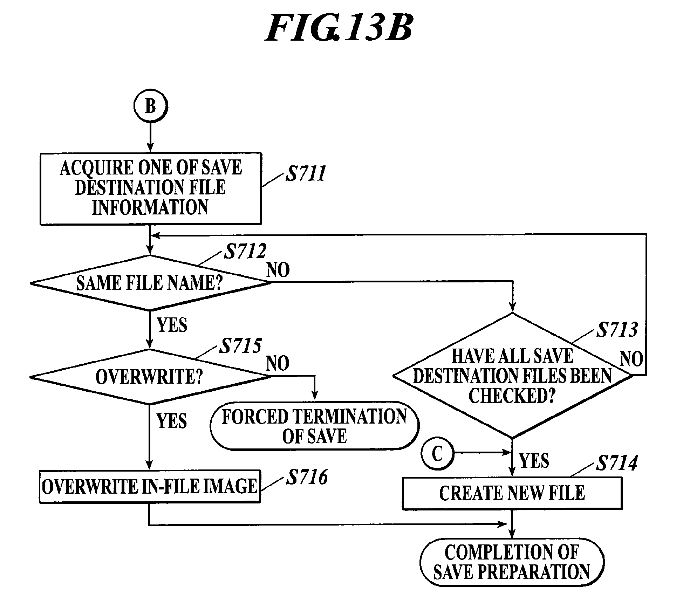

Next, an instance of copying or moving file data of the save source to a root directory of the save destination will be described with reference to the flowchart of FIGS. 13A-13B.

If the user designates the save source and the save destination and issues a File To Root write instruction, then the control unit 15 acquires one of save destination user information at a step S701. The control unit 15 determines whether the user information acquired at the step S701 is the same as user information in a higher hierarchy than a write target file at a step S702. If the user information is not the same, the control unit 15 determines whether all the save destination user information has been checked at a step S703. If the save destination includes unchecked user information, then the processing returns to the step S701, the control unit 15 acquires another save destination user information, and the same processing is repeated.

On the other hand, if all the save destination user information has been checked, the save source user information acquired at the step S701 is not present in the hierarchies of save destination user directories. Therefore, arbitrary user information is created in the save destination at a step S704, and the processing goes to a step S709. If it is determined at the step S702 that the user information is the same, the control unit 15 determines whether to overwrite the save source user information to the save destination at a step S705. If it is determined not to overwrite, the file data cannot be copied or moved, thus forcedly terminating save.

If the save source user information is overwritten to the save destination, then the control unit 15 acquires one of save destination box information at a step S706, and determines whether the box information acquired at the step S706 is the same as box information in a higher hierarchy than the write target file at a step S707. If the box information is not the same, the control unit 15 determines whether all the save destination box information has been checked at a step S708. If the save destination includes unchecked box information, then the processing returns to the step S706, the control unit 15 acquires another save destination box information, and the same processing is repeated.

On the other hand, if all the save destination box information has been checked, the save source box information is not present in the hierarchies of save destination box directories. Therefore, arbitrary box information is created in the save destination at a step S709, and the processing goes to a step S714. If it is determined at the step S707 that the box information is the same, the control unit 15 determines whether to overwrite the save source box information to the save destination at a step S710. If it is determined not to overwrite, the file data cannot be copied or moved, thus forcedly terminating save.

If the save source box information is overwritten to the save destination, then the control unit 15 acquires one of save destination file information at a step S711, determines whether the file information acquired at the step S711 is the same as the write target file information at a step S712. If the file information is not the same, the control unit 15 determines whether all the save destination file information has been checked at a step S713. If the save destination includes unchecked file information, then the processing returns to the step S711, the control unit 15 acquires another save destination file information, and the same processing is repeated.

On the other hand, if all the save destination file information has been checked, the save source file information is not present in the save destination. Therefore, the file information is created in the save destination at a step S714, thus completing save preparation. If it is determined at the step S712 that the file information is the same, the control unit 15 determines whether to overwrite the save source file information to the save destination at a step S715. If it is determined not to overwrite, the file information cannot be copied or moved, thus forcedly terminating save. If it is determined to overwrite, then the file is overwritten to the save destination, and the save preparation is completed.

If a save source FileE is copied or moved to the save destination in the flow stated above, hierarchical structures are those as shown in, for example, FIG. 23A. In FIG. 23A, a directory UserB (user information is arbitrary) is created in a lower hierarchy than the Root directory of the save destination, the directory BoxC (box information is arbitrary) is created in a lower hierarchy than the directory UserB, and a FileE is created in a lower hierarchy than the directory UserB.

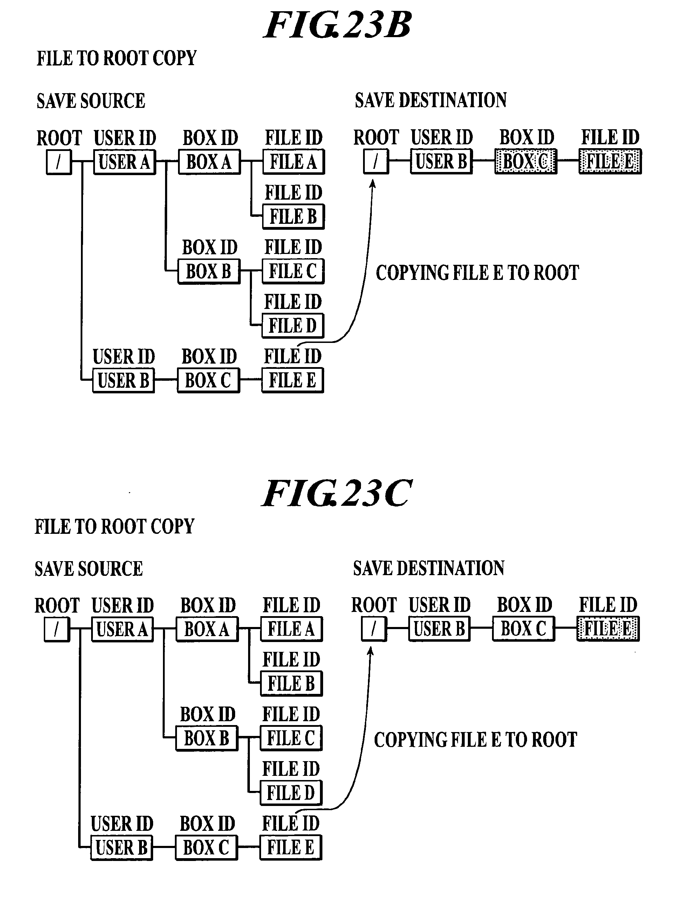

If the UserB is present in the save destination, hierarchical structures are those as shown in, for example, FIG. 23B. In FIG. 23B, a directory BoxC is created in a lower hierarchy than the directory UserB originally present in the save destination, and the directory FileE is created in a lower hierarchy than the directory BoxC.

If the UserB and BoxC present in the save destination, hierarchical structures are those as shown in, for example, FIG. 23C. As Shown in FIG. 23C, a directory FileE is created in a lower hierarchy than the directories UserB and BoxC originally present in the save destination.

### [File To User Copy]

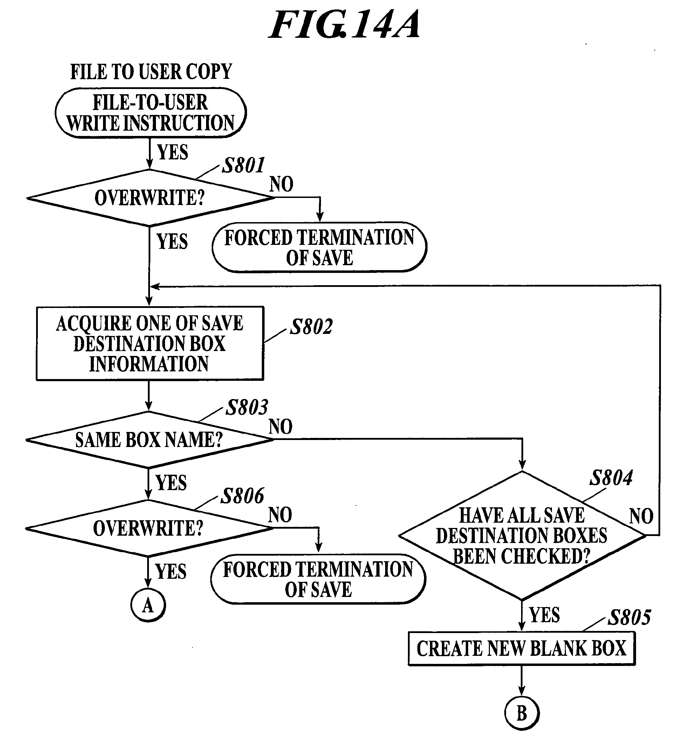

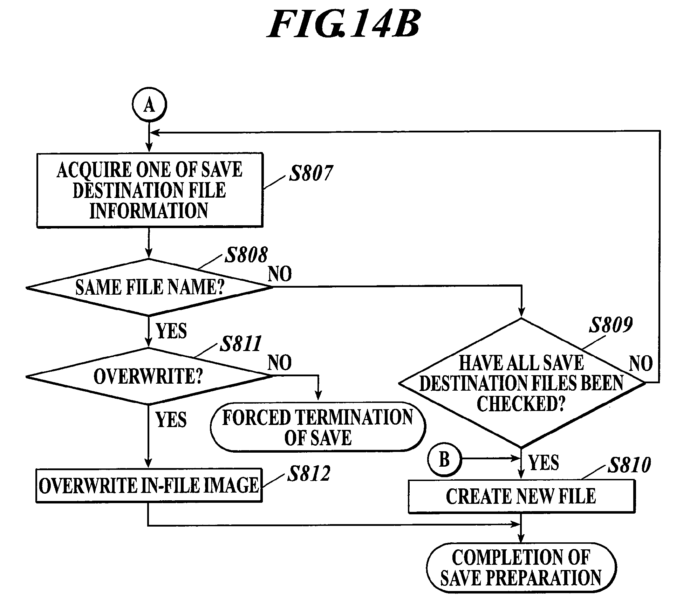

Next, an instance of copying or moving file data of the save source to a user directory of the save destination will be described with reference to the flowchart of FIGS. 14A-14B.

If the user designates the save source and the save destination and issues a File To User write instruction, then the control unit 15 determines whether to overwrite the save source user information to the save destination at a step S801. If it is determined not to overwrite, the file data cannot be copied or moved, thus forcedly terminating save.

Thereafter, the processing is performed at steps S802 to S812 similarly to the steps S706 to S716 shown in FIGS. 13A-13B.

If the save source FileE is copied or moved to the save destination in the flow stated above, hierarchical structures are those as shown in, for example, FIG. 24A. As shown in FIG. 24A, a BoxC (box information is arbitrary) is created in a lower hierarchy than the directory UserA originally present in the save destination, and a directory FileE is created in a lower hierarchy than the directory BoxC.

If the directory BoxC is present in the save destination, hierarchical structures are those as shown in, for example, FIG. 24B. As shown in FIG. 24B, the directory FileE is created in a lower hierarchy than the directory BoxC originally present in the save destination.

### [File To Box Copy]

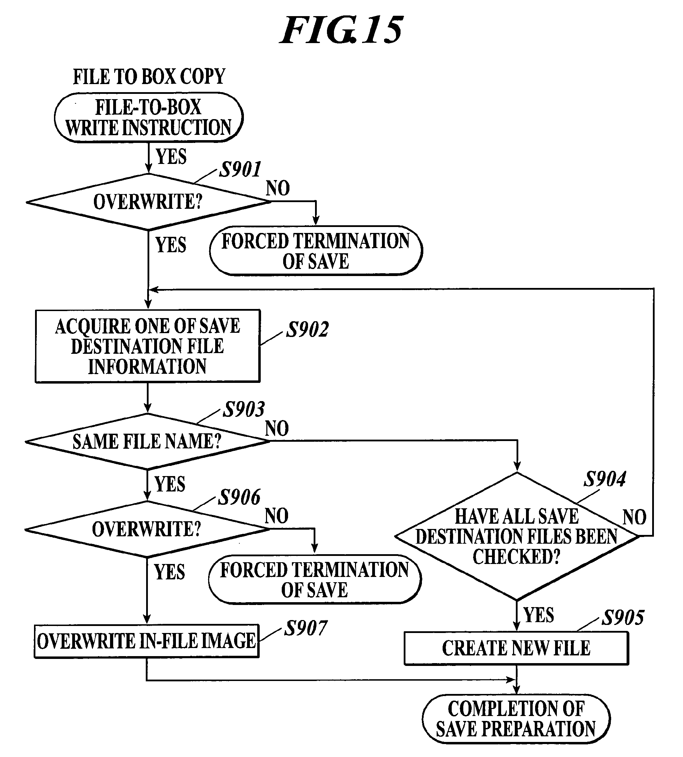

Next, an instance of copying or moving file data of the save source to a box directory of the save destination will be described with reference to the flowchart of FIG. 15.

If the user designates the save source and the save destination and issues a File To Box write instruction, then the control unit 15 determines whether to overwrite the save source box information to the save destination at a step S901. If it is determined not to overwrite, the file data cannot be copied or moved, thus forcedly terminating save.

Thereafter, the processing is performed at steps S902 to S907 similarly to the steps S711 to S716 shown in FIGS. 13A-13B.

If the save source FileE is copied or moved to the save destination in the flow stated above, hierarchical structures are those as shown in, for example, FIG. 25. As shown in FIG. 25, a directory FileE is created in a lower hierarchy than the directories UserA and BoxA originally present in the save destination.

### [File To File Copy]

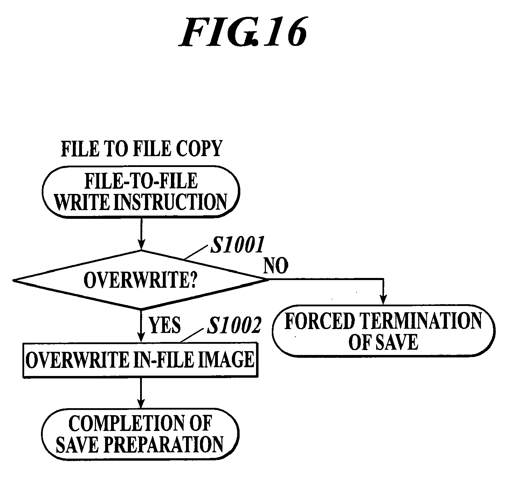

Next, an instance of copying or moving file data of the save source to file data of the save destination will be described with reference to the flowchart of FIG. 16.

If the user designates the save source and the save destination and issues a File To File write instruction, then the control unit 15 determines whether to overwrite the save source file information to the save destination at a step S1001. If it is determined not to overwrite, the file data cannot be copied or moved, thus forcedly terminating save. If it is determined to overwrite the save source Box information to the save destination, the file is overwritten at a step S1002, thus completing save preparation.

If the save source FileE is copied or moved to the save destination in the flow stated above, hierarchical structures are those as shown in, for example, FIG. 26. As shown in FIG. 26, a directory FileE is overwritten to the FileA originally present in the save destination.

In this manner, if the save destination directory is in the higher hierarchy than the higher directory including the save source directory, the control unit 15 exerts control for maintaining the higher directory and copying or moving the save source directory or file data. It is, therefore, possible to copy or move data without destroying the data hierarchical structure.

In the embodiment stated above, the hierarchical structure is the three-layer structure of users, boxes, and files. However, it suffices that each of the save source and the save destination includes the same hierarchical structure of two layers or more. Furthermore, in the embodiment stated above, the save source and the save destination include the same hierarchical structure. However, it suffices that the save destination includes the hierarchical structure of the save source. The save destination may include another hierarchy higher or lower than the hierarchical structure. Moreover, in the embodiment stated above, the instance of copying or moving the data stored in the image formation apparatus 10 to the other storage unit or the recording medium has been described. However, the present invention is not limited to the embodiment but is similarly applicable to an instance of copying or moving data stored in an arbitrary storage unit or recording medium to the other storage unit or recording medium.

The present invention is applicable to an arbitrary device including a control unit exerting control for copying or moving arbitrary data stored in an arbitrary storage unit or recording medium to the other storage unit or recording medium, a control program for causing the arbitrary device to function as a control unit, and a control method for copying or moving arbitrary data stored in an arbitrary storage unit or recording medium to the other storage unit or recording medium.

## Claims

1. A data management apparatus for managing file data including image data or print data by a hierarchical structure, comprising:
an operating unit to designate a save source directory at a save source and a save destination directory at a save destination; and
a control unit to copy or move the designated save source directory as well as the file data included in the save source directory to the save destination directory,
wherein if the save destination directory is on a higher hierarchy level than an upper directory directly including the save source directory, then the control unit copies or moves the save source directory with maintaining the upper directory.

2. The data management apparatus according to claim 1,
wherein if a directory of a same name as a name of the upper directory is not present under the save destination directory, then the control unit newly creates the directory of the same name as the name of the upper directory to copy and move the save source directory.

3. The data management apparatus according to claim 1, or 2,
wherein if a directory of a same name as a name of the upper directory is present under the save destination directory, then the control unit copies or moves the save source directory to the directory of the same name.

4. The data management apparatus according to claim 1, 2 or 3,
wherein if the save destination directory is on a hierarchy level higher by two levels than the save source directory, then the control unit copies or moves the save source directory with maintaining a directory on a hierarchy level higher by one level than the save source directory.

5. The data management apparatus according to any one of the preceding claims,
wherein if the save destination directory is on a hierarchy level as same as the save source directory, the control unit copies or moves a directory under the save source directory on a lower hierarchy level than the save source directory.

6. The data management apparatus according to any one of the preceding claims,
wherein the data management apparatus is an image formation apparatus, the save source is a memory or a hard disk of the image formation apparatus, and the save destination is one of the memory or the hard disk of the image formation apparatus, a computer readable recording medium, and a device connected to the image formation apparatus via a communication network.

7. A data management apparatus for managing file data including image data or print data by a hierarchical structure, comprising:
an operating unit to designate save source file data at a save source and a save destination directory at a save destination; and
a control unit to copy and move the designated save source file data to the save destination directory,
wherein if the save destination directory is on a higher hierarchy level than an upper directory directly including the save source file data, then the control unit copies or moves the save source file data with maintaining the upper directory.

8. The data management apparatus according to claim 7,
wherein if a directory of a same name as a name of the upper directory is not present under the save destination directory, then the control unit newly creates the directory of the same name as the name of the upper directory to copy and move the save source file data.

9. The data management apparatus according to claim 7 or 8,
wherein if a directory of a same name as a name of the upper directory is present under the save destination directory, then the control unit copies or moves the save source file data to the directory of the same name.

10. The data management apparatus according to claim 7, 8 or 9,
wherein if the save destination directory is on a hierarchy level higher by two levels than the save source file data, then the control unit copies or moves the save source file data with maintaining a directory on a hierarchy level higher by one level than the save source file data.

11. The data management apparatus according to any one of the preceding claims 7 to 10,
wherein the data management apparatus is an image formation apparatus, the save source is a memory or a hard disk of the image formation apparatus, and the save destination is one of the memory or the hard disk of the image formation apparatus, a computer readable recording medium, and a device connected to the image formation apparatus via a communication network.

12. A control method for a data management apparatus managing file data including image data or print data by a hierarchical structure, comprising:
a first step of accepting designation of a save source directory at a save source and a save destination directory at a save destination; and
a second step of copying or moving the designated save source directory as well as the file data included in the save source directory to the save destination directory,
wherein at the second step, if the save destination directory is on a higher hierarchy level than an upper directory directly including the save source directory, then the save source directory is copied or moved with maintaining the upper directory.

13. The control method for a data management apparatus according to claim 12,
wherein in the second step, if a directory of a same name as a name of the upper directory is not present under the save destination directory, then the directory of the same name as the name of the higher directory is newly created to copy and move the save source directory.

14. The control method for a data management apparatus according to claim 12 or 13,
wherein in the second step, if a directory of a same name as a name of the upper directory is present under the save destination directory, then the save source directory is copied or moved to the directory in the same name.

15. A control method for a data management apparatus managing file data including image data or print data by a hierarchical structure, comprising:
a first step of accepting designation of a save source file data at a save source and a save destination directory at a save destination; and
a second step of copying or moving the designated save source file data to the save destination directory,
wherein in the second step, if the save destination directory is on a higher hierarchy level than an upper directory directly including the save source file data, then the save source file data is copied or moved with maintaining the upper directory.

16. The control method for a data management apparatus according to claim 15,
wherein in the second step, if a directory of a same name as a name of the upper directory is not present under the save destination directory, then the directory in the same name as the name of the upper directory is newly created to copy and move the save source file data.

17. The control method for a data management apparatus according to claim 15 or 16,
wherein in the second step, if a directory of a same name as a name of the upper directory is present under the save destination directory, then the save source file data is copied or moved to the directory in the same name.

18. A control program causing a computer of a data management apparatus managing file data including image data or print data by a hierarchical structure, to execute:
a first function of accepting designation of a save source directory at a save source and a save destination directory at a save destination; and
a second function of copying or moving the designated save source directory as well as the file data included in the save source directory to the save destination directory,
wherein in the second function, if the save destination directory is on a higher hierarchy level than an upper directory directly including the save source directory, then the save source directory is copied or moved with maintaining the upper directory.

19. A control program causing a computer of a data management apparatus managing file data including image data or print data by a hierarchical structure, to execute:
a first function of accepting designation of a save source file data and a save destination directory; and
a second function of copying or moving the designated save source file data to the save destination directory,
wherein in the second function, if the save destination directory is on a higher hierarchy level than an upper directory including the save source file data, then the save source file data is copied or moved with maintaining the upper directory.
